**Europäisches Patentamt**

**European Patent Office**

**Office européen des brevets**

(19)

(11) Veröffentlichungsnummer: **0 269 604 B1**

(12) # EUROPÄISCHE PATENTSCHRIFT

(45) Veröffentlichungstag der Patentschrift: **24.06.92**

(21) Anmeldenummer: **87890234.5**

(22) Anmeldetag: **22.10.87**

(51) Int. Cl.5: **C22B 4/00**, C22B 7/02, C03B 3/00, F27B 3/18, C21C 5/52

(54) **Verfahren und Ofen zum Schmelzen von feinteiligem Material, insbesondere von metall- oder metalloxidhältigen Stäuben.**

(30) Priorität: **30.10.86 AT 2885/86**

(43) Veröffentlichungstag der Anmeldung:
**01.06.88 Patentblatt 88/22**

(45) Bekanntmachung des Hinweises auf die Patenterteilung:
**24.06.92 Patentblatt 92/26**

(84) Benannte Vertragsstaaten:
**BE CH DE ES FR GB GR IT LI LU NL SE**

(56) Entgegenhaltungen:
**EP-A- 0 071 351      DE-A- 2 424 237**
**FR-A- 2 248 478      FR-A- 2 352 266**
**GB-A- 2 140 902      US-A- 3 397 709**
**US-A- 4 005 252      US-A- 4 033 757**

(73) Patentinhaber: **VOEST-ALPINE INDUSTRIEAN- LAGENBAU GmbH**
**Turmstrasse 44**
**A-4020 Linz(AT)**

(72) Erfinder: **Wohlkönig, Hansjörg, Dipl.-Ing. Dr.**
**Hofhaymer Allee 52**
**A-5020 Salzburg(AT)**
Erfinder: **Müller, Heinz, Dipl.-Ing. Dr. techn.**
**Badergasse 1**
**A-4501 Neuhofen(AT)**
Erfinder: **Auberger, Heinrich, Ing.**
**Liebermannweg 32**
**A-4020 Linz(AT)**

(74) Vertreter: **Wolfram, Gustav, Dipl.-Ing.**
**Schwindgasse 7 P.O. Box 205**
**A-1041 Wien(AT)**

# Beschreibung

Die Erfindung betrifft ein Verfahren zum Schmelzen von feinteiligem Material, insbesondere von metall- oder metalloxidhältigen Stäuben, in einem Elektroofen, wie einem Plasmaofen, mit Hilfe mindestens eines zwischen einer im Deckel des Ofens angeordneten Brennerelektrode und einer im Bodenteil des Ofens angeordneten Bodenelektrode brennenden Lichtbogens, wobei das zu schmelzende feinteilige Material in einen den Lichtbogen umgebenden Raum eingebracht, durch die Strahlungshitze des Lichtbogens geschmolzen und in einem den Bodenteil des Ofens bedeckenden Schmelzbad gesammelt wird, sowie einen Schmelzofen zur Durchführung des Verfahrens.

Beim Chargieren eines Schmelzofens mit feinteiligem Material, wie Stäuben, über Öffnungen in dessen Deckel oder Seitenwand, wie z.B. aus der DE-A - 34 19 575 bekannt, ist es unvermeidbar, daß ein Teil des Staubes vom Abgasstrom mitgerissen wird. Dies ist insbesondere bei Schmelzreduktionsprozessen infolge der dabei entstehenden großen Abgasmengen der Fall und führt zu einer Erhöhung des spezifischen Energieverbrauches.

Zur Vermeidung dieser Nachteile ist es bei einem Verfahren der eingangs beschriebenen Art aus der EP-A - 0 071 351 bekannt, das feinkörnige Material in einen einen direkt brennenden Plasmastrahl umgebenden gekühlten, vertikal angeordneten Rohrstutzen tangential einzublasen. Durch die Strahlungswärme des zwischen dem Plasmabrenner und dem Schmelzbad ausgebildeten Plasmabogens schmilzt das eingebrachte feinkörnige Material, läuft als Film entlang des gekühlten Rohrstutzens ab und tropft schließlich in das Schmelzbad. Dieses Verfahren weist den Nachteil auf, daß ein erheblicher Anteil an Energie als Kühlverlust auftritt, da der am gekühlten Rohrstutzen ablaufende Schmelzfilm kaum eine wärmeisolierende Wirkung aufweist.

Bei dem aus der DE-A - 34 19 575 bekannten Verfahren wird zwar ein Energieverlust in der Schmelzzone vermieden, jedoch steht durch den dort vorgesehenen indirekt brennenden Plasmabrenner die Energieausbringung in einem schlechten Verhältnis zur in den Plasmabrenner eingebrachten elektrischen Energie, da innerhalb des Plasmabrenners große Kühlwasserverluste auftreten.

Die Erfindung stellt sich die Aufgabe, ein Verfahren sowie einen Schmelzofen zur Durchführung des Verfahrens zu schaffen, welche es ermöglichen, feinkörniges Material, insbesondere eisen- und eisenoxidhältigen Staub aus Filteranlagen von Stahlwerken und sonstigen metallurgischen Anlagen zu schmelzen und gegebenenfalls zu reduzieren, wobei eine hohe Energieausnutzung erreicht wird und ein Austrag des feinkörnigen Materials vermieden wird.

Diese Aufgabe wird bei einem Verfahren der eingangs beschriebenen Art dadurch gelöst, daß in dem den Lichtbogen umgebenden Raum ein am Bodenteil des Ofens bzw. im Schmelzbad fußendes und den Lichtbogen peripher umgebendes Festbett aus dem zu schmelzenden Material gebildet wird, an dessen dem Lichtbogen zugewendeter Seite das Material geschmolzen wird, daß das Festbett etwa radial gegen das Ofenzentrum im Ausmaß des geschmolzenen Materialvolumens bewegt wird und daß zwischen dem Festbett und einem das Festbett außenseitig umgebenden Mantel zu schmelzendes Material chargiert wird.

Ein Schmelzofen zur Durchführung des Verfahrens mit einem mit mindestens einer Bodenelektrode ausgestatteten wannenartigen Bodenteil, einem an diesen anschließenden Ofenmittelteil und einem den Ofenmittelteil bedeckenden, mit mindestens einer Brennerelektrode ausgestatteten Deckel, ist dadurch gekennzeichnet, daß der Ofenmittelteil gegenüber dem Bodenteil drehbar gelagert ist und daß seine dem Innenraum zugekehrte Oberfläche mindestens einen in radialer Richtung nach innen ragenden und in Umfangsrichtung keilartig gestalteten Vorsprung aufweist.

Gemäß einer bevorzugten Ausführungsform weist der Vorsprung in Umfangsrichtung des Ofenmittelteiles eine spiralförmig gestaltete Innen-Oberfläche auf, wobei sich vorteilhaft die spiralförmige Innen-Oberfläche des Vorsprunges über nahezu den gesamten Innenumfang des Ofenmittelteiles erstreckt und zwischen dem radialen Minimum und dem radialen Maximum des Vorsprunges eine sich nur über einen geringen Umfangsteil des Ofenmittelteiles erstreckende Schrägfläche vorgesehen ist.

Um ein Mitdrehen des Festbettes mit dem sich drehenden Ofenmittelteil zu vermeiden, sind zweckmäßig zwischen dem Bodenteil und dem Deckel radial und vertikal ausgerichtete und sich etwa über die Höhe und Dicke des Festbettes erstreckende Platten vorgesehen, die am Bodenteil und/oder am Deckel in Umfangsrichtung unbeweglich abgestützt sind.

Vorteilhaft sind die radial gerichteten Platten mittels einer am Ofenmittelteil angeordneten Führungseinrichtung entsprechend der Innen-Oberfläche des Vorsprunges in radialer Richtung bewegbar, wodurch die sich an der Innenseite des Festbettes bildende gesinterte Grenzschicht periodisch aufgebrochen wird, so daß eine zu dichte Versinterung dieser Grenzschicht vermieden und der radiale Materialfluß in Richtung zum Ofenzentrum aufrechterhalten wird.

Gemäß einer bevorzugten Ausführungsform ist die Führungseinrichtung von einer Nut oder Feder gebildet, die mit jeweils einem an der radial gerichteten Platte angeordneten Mitnehmer zusammenwirkt, wobei die Nut oder Feder zur Innen-Oberfläche des Vorsprunges äquidistant verlaufend und außerhalb desselben am Ofenmittelteil angeordnet ist.

Zum Chargieren des feinteiligen Materials ist vorteilhaft zwischen dem Ofenmittelteil und dem Deckel ein Ringspalt vorgesehen, gegen den mindestens eine das feinkörnige Material chargierende Zuführeinrichtung gerichtet ist und dessen Größe vorzugsweise etwa der Differenz des radialen Minimums vom radialen Maximum des Vorsprunges entspricht.

Um mit nur einer einzigen Zuführeinrichtung das Auslangen zu finden, ist diese zweckmäßig mit dem Ofenmittelteil synchron drehbar.

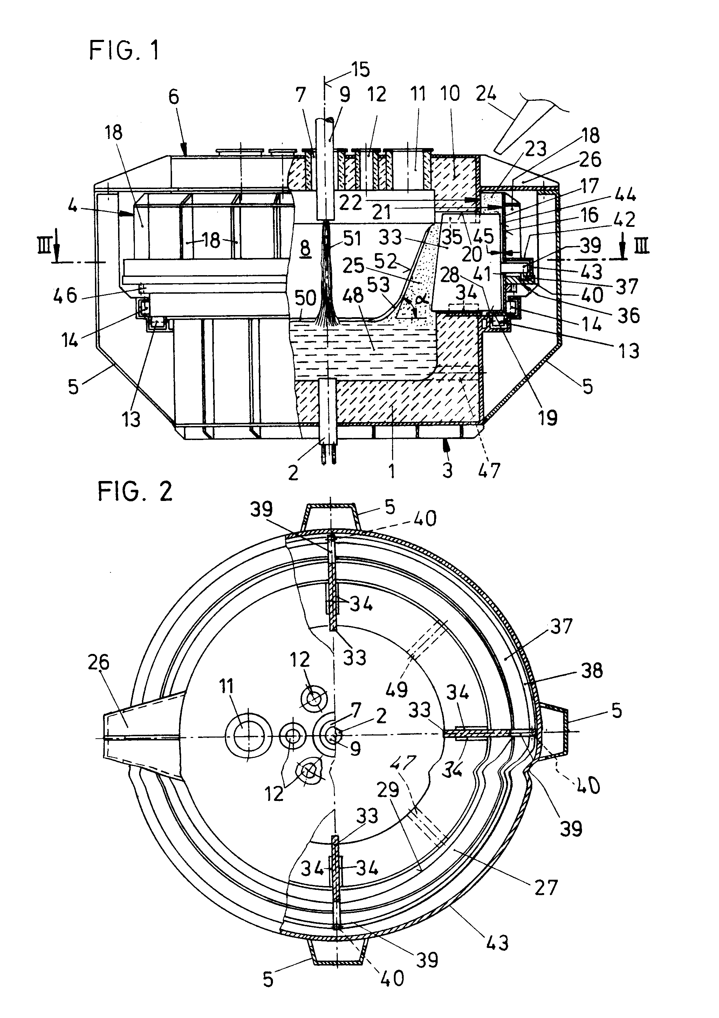

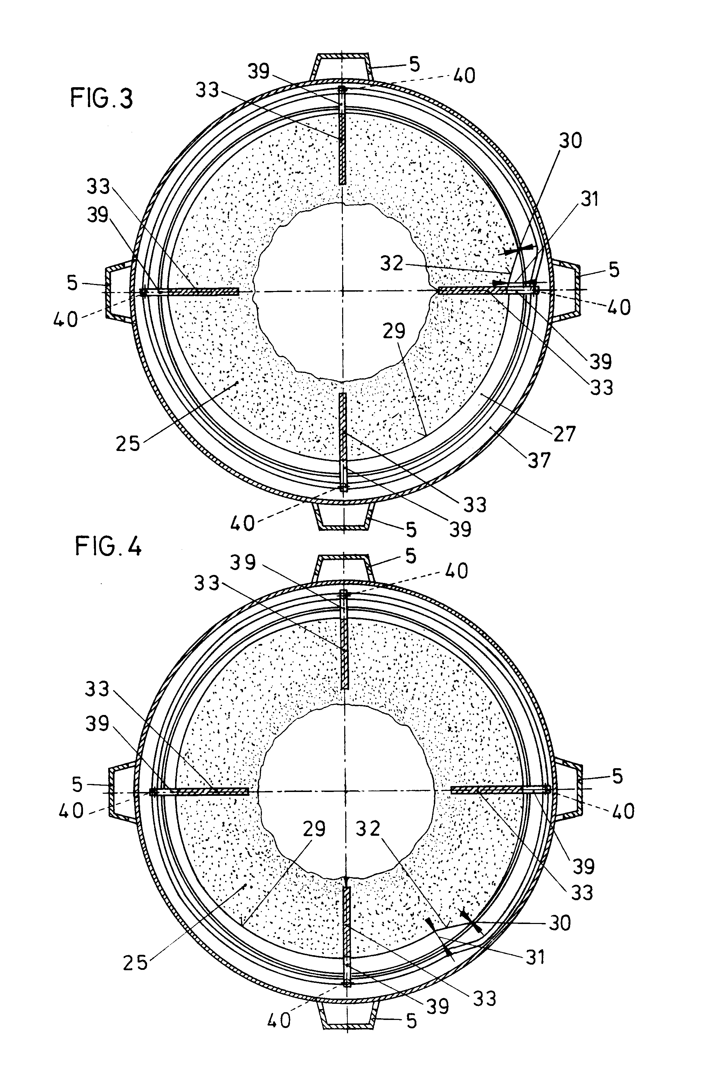

Die Erfindung ist nachfolgend anhand eines in der Zeichnung dargestellten Ausführungsbeispieles näher erläutert. Fig. 1 zeigt eine teilweise geschnittene Seitenansicht eines Schmelzofens, Fig. 2 eine teilweise geschnittene Ansicht des geleerten Schmelzofens von oben und die Fig. 3 und 4 veranschaulichen gemäß der Linie III-III der Fig. 1 geführte Schnittdarstellungen des in unterschiedliche Positionen gedrehten Ofenmittelteiles während des Schmelzbetriebes.

Bei dem in den Figuren dargestellten Schmelzofen handelt es sich um einen Plasmaschmelzofen, der im wesentlichen aus drei Hauptteilen gebildet ist: aus einem wannenartigen, mit einer feuerfesten Auskleidung 1 versehen und mit mindestens einer Bodenelektrode 2 ausgestatteten Bodenteil 3, einem an dem Bodenteil 3 drehbar gelagerten, etwa zylindrischen und vertikal nach oben ragenden Ofenmittelteil 4 und einem am Bodenteil 3 über den drehbaren Ofenmittelteil 4 seitlich überragenden Konsolen 5 abgestützten Deckel 6, der mit mindestens einer durch eine Öffnung 7 in den Ofeninnenraum 8 ragenden Brennerelektrode 9 ausgestattet ist. Weiters weist der mit einer feuerfesten Auskleidung 10 versehene Deckel 6 Öffnungen 11 zum Abziehen des Ofenabgases und gegebenenfalls Öffnungen 12 zum Chargieren eines Reduktionsmittels, wie z.B. Kohlenstoff auf. Diese Öffnungen umgeben die zentral angeordnete, als Plasmabrenner ausgebildete Brennerelektrode 9.

Der drehbare Ofenmittelteil 4 ist am Bodenteil 3 mittels mehrerer am Umfang des Bodenteiles 3 gleichmäßig verteilt angeordneter Rollen 13, 14 gelagert, wobei Rollen 13 mit zum Ofenzentrum bzw. zur Ofenachse 15 radial angeordneter Achse das Gewicht des drehbaren Ofenmittelteiles 4 aufnehmen und Rollen 14 mit vertikal angeordneten Achsen am Bodenteil gelagert sind, die den drehbaren Ofenmittelteil 4 gegenüber dem Bodenteil 3 zentrieren.

Der drehbare Ofenmittelteil 4 ist von einem an seiner Außenseite 16 kreiszylinderförmig gestalteten Mantel 17 gebildet, der durch außenseitig vertikal angeordnete Rippen 18 verstärkt ist. Am unteren Ende ist der Ofenmittelteil 4 mit einem horizontalen, radial nach innen gerichteten Flansch 19 versehen, der auf den horizontal angeordneten Rollen 13 aufliegt und gegen den Umfang des Bodenteiles 3 ragt. Der Mantel 17 ragt um ein geringes Maß über die Unterkante 20 des Deckels 6 empor und es ist sein Innendurchmesser 21 größer als der Außendurchmesser 22 des Deckels, wodurch zwischen dem Deckel 6 und dem Mantel 17 des Ofenmittelteiles 4 ein nach oben offener Ringspalt 23 gebildet ist. Gegen diesen Ringspalt 23 ist eine als Zuführrohr 24 ausgebildete Zuführeinrichtung für das zu chargierende feinteilige Material 25 gerichtet.

Dieser Ringspalt 23 wird nur von am Deckel 6 angeordneten, nach außen ragenden Pratzen 26, mit denen der Deckel 6 auf den Konsolen 5 aufliegt, stellenweise überbrückt.

An der Innenseite des Ofenmittelteiles 4 ist, wie insbesondere aus den Fig. 3 und 4 ersichtlich ist, ein radial nach innen gerichteter Vorsprung 27 vorgesehen, der sich höhenmäßig von der Oberkante 28 des Flansches 19 bis zur Unterkante 20 des Deckels erstreckt. Über die Innen-Oberfläche 29 des drehbaren Ofenmittelteiles 4 ist der Vorsprung 27 - von oben gesehen - spiralförmig gestaltet und erstreckt sich zwischen seinem radialen Minimum 30 und seinem radialen Maximum 31 über nahezu den gesamten Umfang des Ofenmittelteiles 4. Zwischen dem radialen Minimum 30 und dem radialen Maximum 31 ist eine diese Stellen verbindende und sich nur über einen geringen Umfangsteil des Ofenmittelteiles 4 erstreckende Schrägfläche 32 vorgesehen.

Zwischen dem Bodenteil 3 und dem Deckel 6 sind über den Umfang des Innenraumes 8 gleichmäßig verteilt angeordnete, radial und vertikal ausgerichtete Platten 33 eingesetzt, die jeweils mit ihrem unteren Ende in einer am Bodenteil 3 angeordneten radial gerichteten Führung 34 und mit ihrem oberen Ende in einer am Deckel 6 angeordneten, ebenfalls radial gerichteten Führung 35 verschiebbar gelagert sind. Wie aus den Fig. 3 und 4 ersichtlich ist, sind vier in Umfangsrichtung gleichmäßig verteilt angeordnete Platten 33 vorgesehen.

Zum radialen Verschieben dieser Platten 33 dient eine am drehbaren Ofenmittelteil 4 angeordnete Führungseinrichtung 36, die von einer am Mantel 17 außenseitig angeordneten und radial nach außen auskragenden Schiene 37 gebildet ist, in der eine umlaufende und äquidistant zur Innen-Oberfläche 29 des Vorsprunges 27 gestaltete Nut 38 angeordnet ist. In diese Nut 38 ragen an radial nach außen gerichteten Fortsätzen 39 der Platten 33 angeordnete Mitnehmer 40. Um den Durchtritt der Fortsätze 39 durch den sich gegenüber den Fortsätzen 39 drehenden Mantel 17 des Ofenmittelteiles 4 zu ermöglichen, ist der Mantel 17 und mit ihm der Vorsprung 27 höhenmäßig zweigeteilt ausgebildet und ist zwischen diesen beiden Teilen ein der Höhe der Fortsätze 39 entsprechender Spalt 41 vorhanden. Die Verbindung der beiden Teile des Mantels 17 wird über einen am Oberteil des Mantels 17 angeordneten, radial gerichteten Flansch 42, an den ein vertikal nach unten gerichteter Mantelteil 43 anschließt, der wiederum mit der Schiene 37 starr verbunden ist, bewerkstelligt. Die Länge der Fortsätze 39 der Platten 33 ist so gestaltet, daß die radial äußere Kante 44 der Platten 33 in geringem Abstand 45 der Innen-Oberfläche 29 des Vorsprunges 27 zu liegen kommt, so daß eine Reibung bei Drehen des Ofenmittelteiles 4 an den nicht drehbaren Platten 33 vermieden wird.

Zum Drehen des Ofenmittelteiles 4 weist dieser einen an seiner Außenseite angeordneten Zahnkranz 46 auf, in den ein nicht dargestelltes Ritzel eines Antriebsmotors eingreift.

Der Bodenteil 3 weist eine Abstichöffnung 47 für die Schmelze 48 und eine weitere Abstichöffnung 49 für die Schlacke 50 auf, die in Fig. 2 schematisch dargestellt sind.

Die Funktion des Schmelzofens beim Schmelzen des feinteiligen Materials ist folgende:
Nach Chargieren des Schmelzofens mit Hilfe der Zuführeinrichtung 24 und Zünden des Lichtbogens 51 zwischen der Brennerelektrode 9 und der Bodenelektrode 2 bildet sich im Ofeninnenraum 8 ein in der Schmelze 48 fußendes, von zu schmelzendem Material 25 gebildetes Festbett mit einer gegen den Lichtbogen 51 bzw. Plasmastrahl gerichteten, etwa kegelförmig ausgebildeten Oberfläche 52, die laufend durch die radial gerichtete Strahlungshitze des Plasmastrahles 51 abgeschmolzen wird. Auf diese Art und Weise bildet sich eine Caverne, deren Neigungswinkel alpha steiler ist als der Schüttwinkel des einzuschmelzenden Materials 25 bei loser Schüttung.

Es kommt somit zur Ausbildung einer tragfähigen Grenzschicht 53 an der Oberfläche 52 des Festbettes zwischen der flüssigen Phase und dem feinkörnigen Material. Diese Grenzschicht, die durch Zusammensintern des Materials 25 gebildet ist, hat genügend mechanische Festigkeit, um ein Zusammenstürzen der Caverne zu verhindern.

Durch Drehen des Ofenmittelteiles 4 wird mit Hilfe des spiralförmig gestalteten Vorsprunges 27 feinkörniges Material 25 in dem Maß in Richtung zum Ofenzentrum 15 gefördert, wie das zu schmelzende Material 25 innenseitig abschmilzt. Hierbei verhindern die radial und vertikal zwischen dem Bodenteil 3 und dem Deckel 6 angeordneten Platten 33 das Mitdrehen des Festbettes mit dem Ofenmittelteil. Diese Platten 33 bewirken weiters durch den von ihnen ausgeübten Druck in radialer Richtung ein periodisches Aufbrechen der Grenzschicht 53, wie dies in Fig. 3 bei der in radialer Richtung am weitesten nach innen vorgeschobenen Platte 33 dargestellt ist. Hierdurch kann eine zu dichte Versinterung der Grenzschicht 53, die den radialen Materialfluß nach innen stören könnte, wirkungsvoll verhindert werden.

Die Drehzahl bzw. Umfangsgeschwindigkeit des Ofenmittelteiles wird in Abhängigkeit von der innenseitig abschmelzenden Materialmenge gewählt, wobei die Drehung derart erfolgt, daß der spiralförmig ausgebildete Teil der Innen-Oberfläche 29 des Vorsprunges 27 das zu schmelzende Material 25 in radialer Richtung nach innen drückt. Die das radiale Maximum 31 mit dem radialen Minimum 30 des Vorsprunges 27 verbindende Schrägfläche 32 führt während der Drehbewegung zu einem hinter ihr entstehenden Hohlraum, in den mit Hilfe der Zuführeinrichtung 24 neues einzuschmelzendes Material 25 eingebracht wird. Zu diesem Zweck kann die Zuführeinrichtung 24 synchron mit dem Ofenmittelteil 4 gedreht werden, so daß das Zuführrohr 24 stets oberhalb des sich bildenden und mit der Drehung des Ofenmittelteiles 4 mitwandernden Hohlraumes zu liegen kommt.

Mit Hilfe des erfindungsgemäßen Verfahrens und des erfindungsgemäßen Schmelzofens ist es möglich, metalloxidhältige Stäube, wie z.B. FeO-hältiges Material aus Entstaubungsanlagen von Sauerstoffblasstahlwerken, Elektrostahlwerken oder feinkörnige Eisenerze einzuschmelzen und zu reduzieren, wobei der benötigte Reduktionskohlenstoff entweder über die Chargieröffnungen 12 in den Innenraum 8 chargiert und/oder dem über die Zuführeinrichtung 24 chargierten zu schmelzenden Material 25 beigemischt wird. Der Reduktionskohlenstoff weist im Fall des Chargierens durch die Öffnungen 12 zweckmäßig eine solche Korngröße auf, daß er durch das Plasmagas und das bei der Reduktion entstehende Abgas nicht ausgetragen werden kann.

Das erfindungsgemäße Verfahren weist außer der hohen Energieausnutzung und der Vermeidung des Austrages des feinkörnigen Materials 25 noch den Vorteil auf, daß die Strahlungswärme des Lichtbogens 51 bzw. des Plasmastrahles, die in erster Linie in radialer Richtung anfällt, optimal genützt wird und daß eine feuerfeste Ofenauskleidung für den den Bodenteil 3 mit dem Deckel 6 verbindenden Ofenmittelteil 4 nicht erforderlich ist. Ein Teil der Schmelzwärme wird durch die fühlbare Wärme des an dem Schmelzbad umgelenkten und über die Oberfläche 52 des Festbettes entlangstreichenden Plasmagases aufgebracht, weiters wird durch das Schmelzbad in der Berührungszone Schmelze-Festbett fühlbare Wärme übertragen.

Die Erfindung beschränkt sich nicht auf das in der Zeichnung dargestellte Ausführungsbeispiel, sondern kann in verschiedener Hinsicht modifiziert werden. Beispielsweise ist es möglich, anstelle des einzigen Vorsprunges 27 an der Innenseite des Ofenmittelteiles 4 deren mehrere vorzusehen. Auch ist es nicht unbedingt erforderlich, den Vorsprung mit einer von oben gesehen spiralförmigen Innen-Oberfläche auszustatten; es ist lediglich darauf zu achten, daß der Vorsprung 27 bei Drehung des Ofenmittelteiles 4 - bei Betrachtung von einem stillstehenden Teil des Ofens aus - in radialer Richtung zunimmt und so das zu schmelzende Material 25 in Richtung zum Ofenzentrum 15 bzw. zum Plasmastrahl 51 weiterbewegt.

Bezüglich der drehbaren Lagerung des Ofenmittelteiles 4 sind zahlreiche Varianten möglich. Ebenso sind für die Führungen 34, 35 der radial und vertikal ausgerichteten Platten 33 anstelle der im Ausführungsbeispiel dargestellten Gleitführungen andere Führungen, z.B. solche mit Rollenlager, die ein Scheuern der Platten 33 am Bodenteil 3 des Schmelzofens verhindern, möglich.

Anstelle der im dargestellten Ausführungsbeispiel gezeigten einzigen Zuführeinrichtung 24 können deren mehrere oberhalb des Ringspaltes 23 vorgesehen sein, die nacheinander im Sinne der Drehung des Ofenmittelteiles 4 betätigt werden. Der Ofenmittelteil 4 muß nicht unbedingt zylindrisch gestaltet sein, er kann auch eine kegelstumpfförmige Gestalt aufweisen.

Das erfindungsgemäße Verfahren ist nicht nur für Plasmaschmelzöfen von Vorteil, sondern auch für Schmelzöfen mit herkömmlichen, mittels Kohlenstoffelektroden erzeugten Lichtbögen.

## Patentansprüche

1.  Verfahren zum Schmelzen von feinteiligem Material (25), insbesondere von metall- oder metalloxidhältigen Stäuben, in einem Elektroofen, wie einem Plasmaofen, mit Hilfe mindestens eines zwischen einer im Deckel (6) des Ofens angeordneten Brennerelektrode (9) und einer im Bodenteil (3) des Ofens angeordneten Bodenelektrode (2) brennenden Lichtbogens (51), wobei das zu schmelzende feinteilige Material (25) in einen den Lichtbogen (51) umgebenden Raum (8) eingebracht, durch die Strahlungshitze des Lichtbogens (51) geschmolzen und in einem den Bodenteil (3) des Ofens bedeckenden Schmelzbad (48) gesammelt wird, dadurch gekennzeichnet, daß in dem den Lichtbogen (51) umgebenden Raum (8) ein am Bodenteil (3) des Ofens bzw. im Schmelzbad (48) fußendes und den Lichtbogen (51) peripher umgebendes Festbett aus dem zu schmelzenden Material (25) gebildet wird, an dessen dem Lichtbogen (51) zugewendeter Seite das Material (25) geschmolzen wird, daß das Festbett etwa radial gegen das Ofenzentrum (15) im Ausmaß des geschmolzenen Materialvolumens bewegt wird und daß zwischen dem Festbett und einem das Festbett außenseitig umgebenden Mantel (17) zu schmelzendes Material (25) chargiert wird.

2.  Schmelzofen zur Durchführung des Verfahrens nach Anspruch 1, mit einem mit mindestens einer Bodenelektrode (2) ausgestatteten wannenartigen Bodenteil (3), einem an diesen anschließenden Ofenmittelteil (4) und einem den Ofenmittelteil (4) bedeckenden, mit mindestens einer Brennerelektrode (9) ausgestatteten Deckel (6), dadurch gekennzeichnet, daß der Ofenmittelteil (4) gegenüber dem Bodenteil (3) drehbar gelagert ist und daß seine dem Innenraum (8) zugekehrte Oberfläche mindestens einen in radialer Richtung nach innen ragenden und in Umfangsrichtung keilartig gestalteten Vorsprung (27) aufweist.

3.  Schmelzofen nach Anspruch 2, dadurch gekennzeichnet, daß der Vorsprung (27) in Umfangsrichtung des Ofenmittelteiles (4) eine spiralförmig gestaltete Innen-Oberfläche (29) aufweist.

4.  Schmelzofen nach Anspruch 3, dadurch gekennzeichnet, daß sich die spiralförmige Innen-Oberfläche (29) des Vorsprunges (27) über nahezu den gesamten Innenumfang des Ofenmittelteiles (4) erstreckt und zwischen dem radialen Minimum (30) und dem radialen Maximum (31) des Vorsprunges (27) eine sich nur über einen geringen Umfangsteil des Ofenmittelteiles (4) erstreckende Schrägfläche (32) vorgesehen ist.

5.  Schmelzofen nach Anspruch 2, dadurch gekennzeichnet, daß zwischen dem Bodenteil (3) und dem Deckel (6) radial und vertikal ausgerichtete und sich etwa über die Höhe und Dicke des Festbettes erstreckende Platten (33) vorgesehen sind, die am Bodenteil (3) und/oder am Deckel (6) in Umfangsrichtung unbeweglich abgestützt sind.

6.  Schmelzofen nach Anspruch 5, dadurch gekennzeichnet, daß die radial gerichteten Platten (33) mittels einer am Ofenmittelteil (4) angeordneten Führungseinrichtung (36) entsprechend der Innen-Oberfläche (29) des Vorsprunges (27) in radialer Richtung bewegbar sind.

7.  Schmelzofen nach Anspruch 6, dadurch gekennzeichnet, daß die Führungseinrichtung (36) von einer Nut (38) oder Feder gebildet ist, die mit jeweils einem an der radial gerichteten Platte (33) angeordneten Mitnehmer (40) zusammenwirkt, wobei die Nut (38) oder Feder zur Innen-Oberfläche (29) des Vorsprunges (27) äquidistant verlaufend und außerhalb desselben am Ofenmittelteil (4) angeordnet ist.

8. Schmelzofen nach Anspruch 2, dadurch gekennzeichnet, daß zwischen dem Ofenmittelteil (4) und dem Deckel (6) ein Ringspalt (23) vorgesehen ist, gegen den mindestens eine das feinkörnige Material chargierende Zuführeinrichtung (24) gerichtet ist und dessen Größe vorzugsweise etwa der Differenz des radialen Minimums (30) vom radialen Maximum (31) des Vorsprunges (27) entspricht.

9. Schmelzofen nach Anspruch 8, dadurch gekennzeichnet, daß nur eine einzige Zuführeinrichtung (24) vorgesehen ist, die mit dem Ofenmittelteil (4) synchron drehbar ist.

## Claims

1. Process for melting particulate material (25), in particular of dusts containing metals or metal oxides, in an electric furnace, such as a plasma furnace, with the help of at least one electric arc (51) burning between a burner electrode (9) arranged in the lid (6) of the furnace and a bottom electrode (2) arranged in the bottom part (3) of the furnace, wherein the particulate material (25) to be melted is introduced into a space (8) surrounding the electric arc (51), is melted by the radiation heat of the electric arc (51), and is collected in a melt bath (48) covering the bottom part (3) of the furnace, characterised in that, in the space (8) surrounding the electric arc (51), a fixed bed of the material (25) to be melted is formed, having its root on the bottom part (3) of the furnace and in the melting bath (48), respectively, and peripherally surrounding the electric arc (51), the material (25) being melted on the side of the fixed bed facing the electric arc (51), that the fixed bed is moved approximately radially toward the centre (15) of the furnace to an extent corresponding to the volume of the material melted, and that material (25) to be melted is charged between the fixed bed and a shell (17) externally surrounding the fixed bed.

2. Melting furnace for carrying out the process of claim 1, including a tub-shaped bottom part (3) equipped with at least one bottom electrode (2), a furnace central part (4) following upon the bottom part and a lid (6) covering the furnace central part (4) and equipped with at least one burner electrode (9), characterised in that the furnace central part (4) is rotatably mounted with respect to the furnace bottom part (3) and that its surface facing the interior (8) is provided with an least one projection (27) extending radially inwards and being wedge-shaped in the circumferential direction.

3. Melting furnace according to claim 2, characterised in that the projection (27) has a spiral-shaped internal surface (29) in the circumferential direction of the furnace central part (4).

4. Melting furnace according to claim 3, characterised in that the spiral-shaped internal surface (29) of the projection (27) extends over almost the entire inner circumference of the furnace central part (4) and that an oblique surface (32) is provided between the radial minimum (30) and the radial maximum (31) of the projection (27) and extending only over a slight circumferential portion of the furnace central part (4).

5. Melting furnace according to claim 2, characterised in that, between the bottom part (3) and the lid (6), radially and vertically directed plates (33) are provided, which extend approximately over the height and thickness of the fixed bed, which plates are immovably supported in the circumferential direction on the bottom part (3) and/or the lid (6).

6. Melting furnace according to claim 5, characterised in that the radially directed plates (33) are movable in the radial direction along the internal surface (29) of the projection (27) by a guiding means (36) arranged on the furnace central part (4).

7. Melting furnace according to claim 6, characterised in that the guiding means (36) is formed by a groove (38) or tongue which coacts with a dog (40) each arranged on the radially directed plates (33), the groove (38) or tongue being arranged on the furnace central part (4) outside of the projection to extend equidistantly to the internal surface (29) of the projection (27).

8. Melting furnace according to claim 2, characterised in that, between the furance central part (4) and the lid (6), an annular gap (23) is provided, toward which at least one supply means (24) feeding the particulate material is directed and the size of which preferably corresponds to approximately the difference of the radial minimum (30) from the radial maximum (31) of the projection (27).

9. Melting furnace according to claim 8, characterised in that one single supply means (24) is provided which is synchronously rotatable with the furnace central part (4).

**Revendications**

1. Procédé de fusion de matière particulaire (25), notamment de poussières métalliques ou contenant des oxydes métalliques, dans un four électrique tel qu'un four à plasma, à l'aide d'au moins un arc (51) brûlant entre une électrode-brûleur (9) agencée dans le couvercle (6) du four et une électrode de fond (2) agencée dans la partie fond (3) du four, la matière particulaire à fondre (25) étant placée dans un espace (8) entourant l'arc (51), fondue par la chaleur rayonnée par l'arc (51) et rassemblée dans un bain de matière en fusion (48) au-dessus de la partie fond (3) du four, caractérisé par le fait que l'on forme, dans l'espace (8) entourant l'arc (51), un lit solide de matière à fondre (25) qui entoure périphériquement l'arc (51) et forme une embase contre la partie fond (3) du four, donc dans le bain de fusion (48), ce lit étant formé de matière à fondre (25), laquelle est fondue du côté de celui-ci tourné vers l'arc (55), par le fait que l'on déplace sensiblement radialement ledit lit solide, vers le centre (15) du four, cela conformément à l'ampleur du volume de matière fondue, et par le fait que l'on charge la matière à fondre (25) entre le lit solide et une enveloppe (17) entourant extérieurement celui-ci.

2. Four de fusion pour mettre en oeuvre le procédé selon revendication 1, comportant une partie fond (3) du genre cuve, équipée d'au moins une électrode de fond (2), une partie médiane (4) se raccordant à ladite partie fond et un couvercle (6) recouvrant ladite partie médiane (4) et muni d'au moins une électrode-brûleur (9), caractérisé par le fait que la partie médiane (4) du four est montée à rotation par rapport à la partie fond (3) et par le fait que sa surface tournée vers l'espace intérieur (8) présente au moins un saillant (27) formant saillie vers l'intérieur et présentant une configuration en coin en direction périmétrique.

3. Four de fusion selon revendication 2, caractérisé par le fait que le saillant (27) présente, dans la direction périmétrique de la partie médiane (4) du four, une surface intérieure (29) configurée en spirale.

4. Four de fusion selon revendication 3, caractérisé par le fait que la surface configurée en spirale (29) du saillant (27) s'étend presque sur la totalité du pourtour intérieur de la partie médiane (4) du four et par le fait qu'il est prévu, entre le minimum radial (30) et le maximum radial (31) du saillant (27), une surface oblique (32) ne s'étendant que sur une faible partie du périmètre de la partie médiane (4) du four.

5. Four de fusion selon revendication 2, caractérisé par le fait qu'il est prévu, entre la partie fond (3) et le couvercle (6), des plaques (33) qui sont dirigées radialement et verticalement et s'étendent sensiblement sur la hauteur et l'épaisseur du lit solide et prennent appui, sans possibilité de mouvement en direction périmétrique, contre la partie fond (3) et/ou le couvercle (6).

6. Four de fusion selon revendication 5, caractérisé par le fait que les plaques dirigées radialement (33) sont mobiles en direction radiale, d'une manière correspondant à la surface intérieure (29) dudit saillant (27), au moyen d'un dispositif de guidage (36) agencé sur la partie médiane (4) du four.

7. Four de fusion selon revendication 6, caractérisé par le fait que le dispositif de guidage (36) est constitué par une rainure (38) ou par un relief coopérant avec un entraîneur (40) agencé sur la plaque correspondante (33) dirigée radialement, ladite rainure (38) ou relief s'étendant en condition d'équidistance par rapport à la surface intérieure (29) du saillant (27) et étant agencée en dehors de celui-ci, sur la partie médiane (4) du four.

8. Four de fusion selon revendication 2, caractérisé par le fait qu'il est prévu, entre la partie médiane (4) du four et le couvercle (6), un interstice annulaire (23) vers lequel est dirigé au moins un dispositif d'alimentation (24) chargeant la matière à grain fin, la taille de cet interstice correspondant de préférence à peu près à la différence entre le minimum radial (30) et le maximum radial (31) du saillant (27).

9. Four de fusion selon la revendication 8, caractérisé par le fait qu'il n'est prévu qu'un seul dispositif d'alimentation (24) monté pour tourner en synchronisme avec la partie médiane (4) du four.

FIG. 1

FIG. 2

FIG.3

FIG.4